Europäisches Patentamt

(19) European Patent Office

Office européen des brevets

(11) Publication number: **0 043 597**
**B1**

(12) **EUROPEAN PATENT SPECIFICATION**

(45) Date of publication of patent specification: **30.07.86**

(21) Application number: **81200507.2**

(22) Date of filing: **13.05.81**

(51) Int. Cl.⁴: **B 01 D 45/14, B 01 D 21/26**

(54) 'Apparatus for displacing and purifying fluids.

(30) Priority: **13.05.80 NL 8002744**

(43) Date of publication of application:
--13.01.82 Bulletin 82/02

(45) Publication of the grant of the patent:
**30.07.86 Bulletin 86/31**

(84) Designated Contracting States:
**AT BE CH DE FR GB IT LI LU NL SE**

(56) References cited:
**FR-A-1 049 466**
**GB-A-1 408 418**
**US-A-2 441 631**

(73) Proprietor: **Theyse, Frederik Herman**
**Lindenallee 4**
**D-5058 Odenthal (DE)**

(72) Inventor: **Theyse, Frederik Herman**
**Lindenallee 4**
**D-5058 Odenthal (DE)**

(74) Representative: **Lobatto, Jacob Louis, Drs**
**Pastoor Buyslaan 40**
**NL-2242 RL Wassenaar (NL)**

Courier Press, Leamington Spa, England.

**Description**

The invention relates to an apparatus for displacing and purifying fluids. More specifically the invention relates to a centrifugal dust/dirt separator for the separation of dust and/or dirt from a fluid.

In general ventilators are used for displacement of a gas. The gas may be displaced from one area to another or from a specific area to the atmosphere, or vice versa. The purpose is to replace the gas present in an area at the start of the ventilation or at least to displace the gas. This principle is applied in a similar manner in other flow apparatus such as liquid pumps and compressors.

In many cases it is desirable or even necessary that dust and/or dirt present in a gas to be removed or to be fed in, is removed from that gas prior to its entering into another area or the atmosphere, or vice versa. As examples of areas from which no dust and/or dirt should be emitted for ecological considerations or considerations of harmfulness of the dust and/or dirt present may be mentioned mills, mixers, foundries, saw-mills, brick-handling industry, and nuclear power stations. As an example of an area which should be protected against the entrance of dust and/or dirt may be mentioned dust-free work-shops, such as required for the manufacture of precision-instruments.

In order to compensate for the problem thus arising, cyclones, which remove only coarse particles, and electric filters, which remove fine particles, have been used hitherto. In addition dustfilters of filter-cloth have also been used. In that case care should be taken to remove a collected mixture of dust and dirt, that has settled on the cloth, periodically, as otherwise the filtercloth would get clogged. To this end mechanical aids may be used, allowing for removal of an increased layer of dust, also referred to as a cake, or instead of these mechanical aids centrifugal forces may be applied, causing the particles, when they have increased in size up to a certain level, to be hurled away from the rotating filtercloth. An apparatus of that type is described e.g. in U.S.A. Patent Specification No. 2,994,407.

It is characteristic for gas purification during ventilation, that only slight pressure-drops are allowable, as the lift capacity of ventilators is limited. As a consequence thereof gas velocities in cyclones are thus limited to at most some tenfolds of meters per second, whereas the filtercloth used should have a large transmitting surface to limit the pressure drops.

Of the ventilators used in this field hitherto, an axial elevator is unsuitable, as in that case a leaving gasborn particle is displaced only a little in a tangential direction with respect to the position on entering, and thus no rotation will occur. Consequently an efficient removal of dust and/or dirt is not possible as a consequence of currents occurring in the ventilator proper.

On the other hand a high tangential velocity will occur at the outlet side in a diffusor of a radial ventilator, but this velocity should be converted into pressure in the diffusor as soon as possible, thus immediately decreasing the velocity. It is true that the coarser particles in that case will move towards the wall at high velocity, but these will be deposited there and there is no gasstream available to remove them from the wall. Thus the ventilator will soon lose its efficiency as a result of caking. Moreover smaller particles are not removed in this manner; they remain suspended in the gasstream.

A special type of ventilator comprises a combination of the radial and the axial types, in which a gasstream is fed in a radial direction and is leaving in an axial direction. The radially entering gasstream may show a slight axial and/or tangential movement, whereas the axially leaving gasstream may still have a tangential component to a minor extent. In order to suppress this tangential movement as well, fixed guideblades are usually mounted in the housing, providing a perfectly axial leaving stream with maximum pressure. Exactly at the transition from the radial section towards the axial section a plane perpendicular to the axis of rotation is created, wherein a fixed rotation of the gas around the axis of the rotor of the ventilator occurs.

The invention relates to an improvement of this latter special type of flow apparatus as elucidated on the basis of a ventilator, comprising a combination of a radial fluid inflow and an axial fluid outflow, which allows to make use of this rotational flow of the gas in a plane perpendicular to the axis of rotation for the removal of dust and/or dirt. This improvement is achieved with a centrifugal dust/dirt separator comprising a housing (16) containing a centrifugal impeller rotatable about the axis of the housing, a fluid-flow entry port (c) for feeding dirty fluid to the impeller, an outlet (10) for separated dust/dirt, the impeller comprising a rotor (12) provided with axially extending, circumferentially spaced blades (3), each blade (when viewed edge-on) comprising a straight middle section (3b, 14) extending radially from the rotor, and upstream and downstream curved end sections, the downstream end section (3a, 9) being curved in one dimension out of the plane containing the middle section (3b, 14) and the upstream end section (3c, 15) being additionally twisted about its axis, the said outlet (10) communicating with the housing interior via a passageway (11) which opens at a point immediately upstream of the transition of the blade middle section (3b, 14) to the blade downstream end section (3a, 9).

In this middle section (3b, 14), located between the upstream and downstream end sections (3c, 15) and (3a, 9) respectively, a fixed rotational flow occurs over the full axial length of the middle blade section, allowing for centrifugation of the gas at maximum velocity, provided that high strength material is used for the blade.

If desired the middle blade section (3b, 14) may also be driven independently and be rotated with a velocity deviating from and preferably higher than the velocities in the preceding upstream section end section (3c, 15) and the subsequent downstream end section (3a, 9) of the separator.

The dirt and/or dust containing gasstream thus removed may be returned to the inlet area or if desired the dirt and/or dust may be separated off in an appropriate bag or settling chamber.

The design of the middle blade section (3b, 14) will be dependant on the type of dirt and/or dust to be removed, the length of the middle blade section and possibly axial countercurrent whirls, generated over the length of the middle blade section, selected in order to obtain maximum effectiveness independent of the rotation velocity of the middle blade section, which is of course of major importance.

Accordingly the separator has preferably a middle blade section (3b, 14) that is radially extended with respect to the preceding upstream end section (3c, 15) and the subsequent downstream end section (3a, 9). More specifically the middle blade section (3b, 14) is of equal radial extension over its full length, though depending on circumstances the middle blade section (3b, 14) may be radially extended in part. According to a modification along that line the middle blade section (3b, 14) may be provided with two or more extended subsections.

Apart from the conditions as described above, in which the dust and/or dirt should be considered as detrimental ballast, it may also be that the dust and/or dirt as such possess useful properties and therefore may be considered as products.

The invention will be elucidated in more detail at the hand of the accompanying drawing, which however does not constitute a limitation with respect to the present invention.

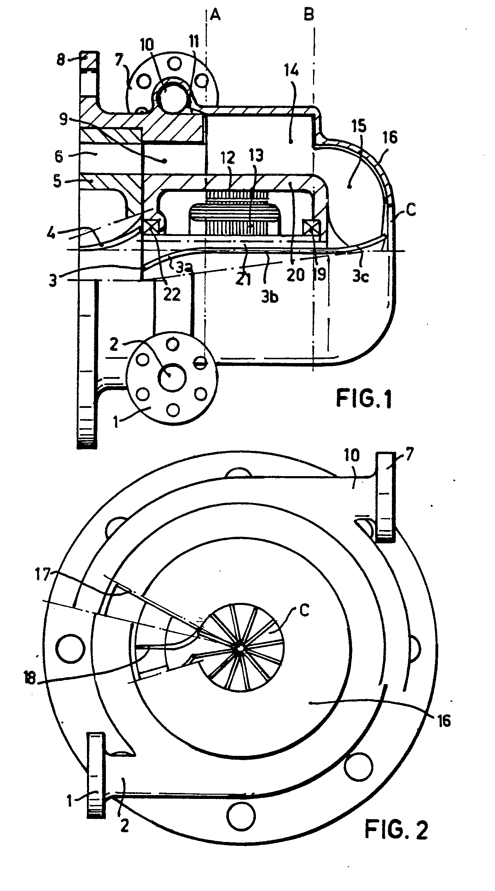

In the drawing Fig. 1 shows a cross-sectional view of a dust and/or dirt separator according to the invention, and Fig. 2 shows a front view of the dust and/or dirt separator according to the invention as shown in Fig. 1, partially cut away.

In Fig. 1 a rotor section between tangential cross-sections A and B is provided with straight, substantially completely axially directed middle blade sections. The upper part of Fig. 1 shows a cross-section of the separator with extended middle blade in a gas purifying purifying section.

In Fig. 1 is shown a connecting flange 1 for gas carrying dust and/or dirt, provided with a discharge conduit 2, connected with a knife-edge separator (not shown). The gas is then arriving from a full ventilator blade 3 with a short separating section, comprising a downstream end section 3a, a middle section 3b and an upstream end section 3c. If desired a guide blade 4 may be positioned as part of a guide blade carrier 5, inserted in a housing 16. At 6 a side view of guide blade 4 is presented to complete the picture of the positions of the guide blades 4. Connecting flange 7 is for discharging a gas, carrying dust and/or dirt, when using extended middle blade sections, and connecting flange 8 is for securing the complete separator, which may be used for either feeding or extracting. Downstream end section 9 which represents a side view of the downstream end section 3a is designed the same way as in a customary ventilator, taking into account an axial feed-flow which does not rotate with respect to the rotor. A discharge conduit 10 is connected to connecting flange 7 and is in turn connected with a knife-edge separator (not shown). A separating chamber is provided with a discharge connection 11. A drive motor is provided with a rotor 12 and a stator 13. Middle blade section 14 which represents a side view of the middle blade section 3b, is the section of the separator blade, wherein the separation of the dust and/or dirt takes place. The upstream end section 15, which represents a side view of upstream end section 3c of the separator blade in the embodiment as presented, provides the blades with radially stressed fibres. A separator bearing 19 is located in the separator housing 16. A central section 20 of the separator rotor is hollow in construction. In this embodiment the fixed ventilator shaft 21 is connected to guide blade carrier 5, and separator bearings 22 and 19 provide for the support required.

Inasfar as applicable the corresponding reference numbers have been used in Fig. 2. In addition the latter is provided with a front view 17 of a separator blade with a middle blade section and a front view 18 of the separator blade with constant height over the full length of the rotor 20. The diameter of the separator blades is of course also limited by the strength of the material used for the manufacture of the blades. As the residence time of a gas to be purified should be long enough to obtain the desired degree of purification, the middle blade section 14, 3b should have adequate length. The latter can be computed in a known manner. The purification may also be promoted by causing a countercurrent whirl.

In this connection it should be observed that in essence a liquid pump or a compressor may be designed in a similar manner. In these latter the medium (liquid or gas respectively) is also pressurized and simultaneously purified. Of course it should be taken into account that if the medium is a liquid, said liquid has a higher viscosity and also the difference in mass with respect to the impurities is smaller, thus making the separation more difficult to achieve.

A part of the gasstream, carrying dust and/or dirt, may be discharged by means of a knife-edge or similar means at the end of the purification section and be returned to the feed end, optionally after having passed through a dust collector, a dust bag or another suitable apparatus. The countercurrent whirl, as mentioned above, may be caused at that point by reinjecting gas under relatively high pressure, e.g. gas originating from the outlet of the separator, or instead thereof by a difference in temperature or by other known means. This may be advantageous especially for the middle blade section of increased radial extension, as the residence time is thus extended and accordingly a better separation is achieved.

If desired the section between A and B in Fig. 1 may be driven at a deviating number of revolutions. Usually this will be an increased number of revolutions with respect to the upstream and downstream end sections respectively, as this will result in an improved separation. Moreover the upstream and downstream end sections respectively may have a mutually deviating number of revolutions. However it will be obvious that this will result in a more complicated construction, usually requiring additional guiding systems, making the separation thus obtained only economically feasible for special cases. Though they are shown in the drawings, the presence of guide blades is not a necessity for obtaining the effect as aimed for by the invention.

Customary materials may be used in manufacturing separators according to the invention. Special steps in the construction are required only for the middle blade section (3b, 14). In many cases satisfactory results are obtained using glassfibre reinforced synthetic resins as these allow for high angular velocity, while in addition the wear properties with respect to erosion in the outer layer of resin will usually be favourable. This material allows for the manufacture of rotors in all dimensions from 10 cm up to even many meters. Thus the total field of applications ranging from kitchen fans to and including largest industrial flow apparatus is covered. Though there is a preference for the use of reinforced synthetic resins, in particular polyester, it is however still necessary to use metal rotors at higher temperatures as these synthetic resins are insufficiently heat-resistant.

In the embodiment of the invention as shown in Fig. 1 and Fig. 2, a gas, carrying dust and/or dirt, is drawn in at ventilator blade 3 where initially the upstream end section 3c with the bladeshape of a radial ventilator is followed. Here the gas is subject to a radial-axial propulsion. The blade then curves around the edges of the rotor core, but does not convert directly to the downstream end section 3a. Instead thereof it has a middle blade section 3b, which is a radially extending flat section, perpendicular to the axis of rotation. Therein a fixed rotational flow of the gas occurs around the axis of the rotor. In this section the radially directed blade 3b is fully axial over its total length. This middle blade section causes centrifugation of the gas resulting in a separation of dust and/or dirt from the gas. This centrifugal action is further improved by extending the blade in this section (extended middle blade section 14), i.e. extended· in radial direction. A layer of gas with highly concentrated dust and/or dirt is then removed; in the case of the extended blade by way of discharge connection 11 towards outlet 10, or in a similar manner from the unextended blade (not shown in Fig. 1) towards discharge conduit 2. The functioning of the separator according to the invention is shown is shown in the above both when using an unextended blade (lower section of Fig. 1, not shown in detail) as well as using an extended blade 14 (shown in the upper section of Fig. 1). For both of these embodiments of the invention gas, carrying dust and/or dirt is introduced through opening C. For completeness sake it should be observed, that apart from the design of the extended blade section 14 as shown in the drawing, not only various types of combinations of unextended and extended blades may be envisaged, though these combinations do not provide the optimum yield of an extended middle blade section, but also that is an extension of the middle blade section 3b between A and B is envisaged, this section may be gradually rising along a straight or curved line, as the best result is obtained when discharging at the highest point, i.e. at maximum centrifugal action. Here again various types of modifications such as a deviating shape or a twice or more times repeated extended section between A and B, are possible alternatives.

## Claims

1. A centrifugal dust/dirt separator comprising a housing (16) containing a centrifugal impeller rotatable about the axis of the housing, a fluid-flow entry port (c) for feeding dirty fluid to the impeller, an outlet (10) for separated dust/dirt, the impeller comprising a rotor (12) provided with axially extending, circumferentially spaced blades (3), each blade (when viewed edge-on)˙ comprising a straight middle section (3b, 14) extending radially from the rotor, and upstream and downstream curved end sections, the downstream end section (3a, 9) being curved in one dimension out of the plane containing the middle section (3b, 14) and the upstream end section (3c, 15) being additionally twisted about its axis, the said outlet (10) communicating with the housing interior via a passageway (11) which opens at a point immediately upstream of the transition of the blade middle section (3b, 14) to the blade downstream end section (3a, 9).

2. A separator according to claim 1, characterized in that the middle blade section (3b, 14) is radially extended with respect to the preceding upstream end section (3c, 15) and the subsequent blade downstream end section (3a, 9).

3. A separator according to claim 2, characterized in that the middle blade section (3b, 14) is of equal radial extension over its full axial length.

4. A separator according to claim 2, characterized in that the middle blade section (3b, 14) is radially extended in part.

5. A separator according to any one of claims 2 to 4, wherein the middle blade section (3b, 14) is provided with two or more extended subsections.

## Patentansprüche

1. Ein zentrifugaler Staub/Schmutzabscheider, bestehend aus einem Gehäuse (16), welcher ein zentrifugales, um die Achse des Gehäuses drehbares Laufrad enthält, ein Fluidstromeingang (c), um verschmutztes Fluid dem Laufrad zuzuführen, ein Ausgang (10) für abgeschiedener Staub und/oder Schmutz, ein Laufrad, bestehend aus einem Rotor (12) versehen mit in axialer Richtung verlängerten, peripher angebrachten Schaufeln (3), jede Schaufel (hochkant gesehen) enthält einen geraden Mittelteil (3b, 14), der vom Rotor in radialer Richtung verläuft und flussaufwärts und -abwärts gebogene Endteile, wobei der Endteil flussabwärts (3a, 9) in einer Richtung aus der Fläche welches den Mittelteil beinhaltet (3b, 14) gebogen ist und das Endteil flussaufwärts (3c, 15) ist zusätzlich um seiner Achse herum gedreht, Der besagte Ausgang (10) steht in Verbindung mit dem Gehäuseinnern via einem Durchgang (11) welcher sich an einem Punkt direkt flussaufwärts des Uebergangs von dem Schaufelmittelteil (3b, 14) zu dem Schaufelendteil flussabwärts öffnet.

2. Ein Trenngerät gemäss Patentanspruch 1, welcher dadurch charakterisiert wird, dass das mittlere Schaufelteil (3b, 14) in Hinsicht auf dem vorausgehenden Endteil flussaufwärts (3c, 15) und dem nachfolgenden Schaufelendteil flussabwärts (3a, 9) in radialer Richtung verlängert ist.

3. Ein Trenngerät gemäss Patentanspruch 2, welcher dadurch charakterisiert wird, dass der mittlere Schaufelteil (3b, 14) über seine gesamte Achsenlänge eine gleiche radiale Ausbreitung aufweist.

4. Ein Trenngerät gemäss Patentanspruch 2, welcher dadurch charakterisiert ist, dass der mittlere Schaufelteil (3b, 14) eine teilweise radiale Verlängerung aufweist.

5. Ein Trenngerät gemäss einem der Patentansprüche 2 bis 4, worin der mittlere Schaufelteil (3b, 14) mit zwei oder mehr verlängerten Unterabschnitten versehen ist.

**Revendications**

1. Un séparateur centrifuge de poussière/d'impureté contenant un carter (1) comportant une roue à palettes tournant sûr l'axe de son carter (16), une entrée pour le courant de fluides (c) pour introduire le fluide sali à la roue à palettes, une sortie (10) pour la poussière/les impuretés séparées, une roue à palettes contenant un rotor (12) pourvu de palettes qui s'étendent axialement et qui sont arrangées à sa périphérie (3) chaque palette (vue de debout) comprenant un secteur central droit (3b, 14) s'étendent radialement du rotor et des secteurs finaux courbes en amont et en aval dont le secteur final en aval (3a, 9) est courbé en une direction sortante de la plaine comprenant le secteur central (3b, 14) et dont le secteur final en amont (3c, 15) est tordu complémentiarement au niveau de son axe, la sortie susmentionnée (10) communiquant avec l'intérieur du carter via un passage (11) s'ouvrant à un point qui se trouve directement en amont de la transition du secteur central de la palette (3b, 14) au secteur final en aval de la palette (3a, 9).

2. Un séparateur conforme à la revendication 1, caractérisé en ce que le secteur central de la palette (3b, 14) s'étend radialement au égard au secteur final en amont précédent (3c, 15) et le secteur final en aval subséquent de la palette (3a, 9).

3. Un séparateur conforme à la revendication 2, caractérisé en ce que le secteur central de la palette (3b, 14) présente une extension radiale identique sur toute la longeur axiale.

4. Un séparateur conforme à la revendication 2, caractérisé en ce que l'extension radiale du secteur central de la palette (3b, 14) se fait partielement.

5. Un séparateur conforme à une des revendication 2 à 4, caractérisé en ce que le secteur central de la palette (3b, 14) est pourvu de deux ou de plus de deux soussecteurs étendus.

**0 043 597**

FIG.1

FIG. 2